# EUROPÄISCHE PATENTSCHRIFT

(11) **EP 2 020 362 B1**
(45) Veröffentlichungstag und Bekanntmachung des Hinweises auf die Patenterteilung: **07.09.2011**
(21) Anmeldenummer: 08012400.1
(22) Anmeldetag: 09.07.2008
(51) Int. Cl.: B62D 5/04, F16H 55/14

(54) **Elektrische Lenkvorrichtung für Kraftfahrzeuge**
Electric steering device for motor vehicles
Dispositif de direction électrique pour des véhicules automobiles

(30) Priorität: 30.07.2007 DE 102007035970
(43) Veröffentlichungstag der Anmeldung: 04.02.2009
(73) Patentinhaber: IMS Gear GmbH, 78166 Donaueschingen (DE)
(72) Erfinder: Willmann, Norbert, 79871 Eisenbach (DE); Enzmann, Bernd, 78052 Villingen-Schwenningen (DE); Oberle, Stephan, 78050 Villingen-Schwenningen (DE)
(74) Vertreter: Patentanwälte Westphal, Mussgnug & Partner

(56) Entgegenhaltungen:
- EP-A1- 0 742 377
- EP-A2- 1 327 569
- WO-A1-2007/077415
- DE-A1- 10 056 133
- DE-A1- 10 058 885
- FR-A1- 2 728 642
- US-A- 4 831 897
- US-A- 5 307 705
- US-A1- 2007 089 699

## Beschreibung

Die Erfindung bezieht sich auf eine elektrische Lenkvorrichtung für Kraftfahrzeuge mit den oberbegrifflichen Merkmalen gemäß Patentanspruchs 1.

Die DE 100 56 133 A1 beschreibt eine elektrische Lenkvorrichtung für Kraftfahrzeuge, wie sie anhand Fig. 9 grob skizziert ist. Übliche derartige Lenkvorrichtungen weisen eine Zahnstangenlenkung auf. Eine Eingangswelle 2, welche mit einem Lenkrad 4 in Wirkverbindung steht, trägt ein Antriebsritzel der Zahnstangenlenkung, wobei das Antriebsritzel in Eingriff mit einer Zahnstange der Zahnstangenlenkung 1 steht. Die Zahnstange bildet zusammen mit zwei Lenkschubstangen 5 und 6 ein Ausgangsglied, welches mit nicht dargestellten zu lenkenden Rädern in Wirkverbindung steht. Die Zahnstange bildet außerdem das Antriebsteil der Lenkung. Mit einer solchen Lenkvorrichtung kann ein Lenkdrehmoment von dem Lenkrad 4 zu den zu lenkenden Rädern übertragen werden. Zur Unterstützung des Lenkens dient ein Elektromotor 7, welcher ein unterstützende Moment auf die Eingangswelle 2 ausübt. Der Elektromotor 7 ist dabei vorzugsweise derart angeordnet, dass seine Achse senkrecht zu der Achse der Eingangswelle 2 und damit des Antriebsritzels steht. Jedoch sind auch andere Winkelkonstellationen umsetzbar. Der Elektromotor 7 dient dazu, über eine Schnecke 13 ein Schneckenrad 30 anzutreiben, um über das Schneckenrad 30 ein unterstützendes Moment auf die Antriebswelle 2 zu übertragen. Die Antriebswelle 2 führt dabei zentral längs einer Achse X als Rotationsachse durch das Schneckenrad 30 hindurch.

Die Kraft- bzw. Momentibertragung zwischen der Antriebswelle 2 und dem Schneckenrad 30 erfolgt indirekt über einen zwischengeschalteten Dämpfer, welcher aus zwei elastischen Abstandshaltern als zwei Dämpfungselementen ausgebildet wird. Die beiden Dämpfungselemente sind dabei im Wesentlichen ringförmig ausgebildet. Durch die Ausbildung aus einem sehr weichen elastischen Material wie Gummi findet eine dämpfende Wirkung statt. Die beiden ringförmigen Abschnitte der beiden Dämpfungselemente weisen jeweils nach radial außen gerichtete Fortsätze auf, welche in Zahnkranzausnehmungen eingreifen, welche in den innenseitigen und seitlichen Flächen des Zahnkranzes 30 ausgebildet sind. Dadurch findet eine hohe elastische Dämpfung sowohl in radialer Richtung als auch in Umfangsrichtung statt.

Zwar bieten derart entkoppelte Zahnräder bereits eine einerseits gute Kraftübertragung und andererseits einen erhöhten Fahrkomfort, jedoch sind auch Nachteile zu verzeichnen.

Üblicherweise soll in torsionaler Richtung eine Dämpfung stark progressiv wirken, insbesondere eine Anschlagdämpfung für Zahnkranz-Nocken. Im Nullpunkt einer entsprechenden Fehlerkennlinie ist die Dämpfung jedoch eher zu weich, wobei gegebenenfalls sogar Spiel zwischen Zahnkranz und Flansch entstehen kann. Dies ist jedoch ein wesentlicher und höchst kritischer Aspekt, um eine ruckelfreie Regelung einer Motor-Momentenunterstützung zu ermöglichen. Daher ist eine Mindeststeigerung einer Dämpferkennlinie um die Mittellage herum erforderlich.

In radialer Richtung, das heißt in Richtung eines Spielausgleichs, ist eine derartige Lösung viel zu hart. Dadurch funktioniert dann ein Verzahnungsspielausgleich nicht mehr korrekt.

Eine Dämpfung sollte über alle Temperaturen ähnlich funktionieren. Ein gummiartiger Dämpferwerkstoff ändert jedoch seine werkstoff-elastischen Eigenschaften wie Festigkeit, Rückstellverhalten, Druckverformungsrest, Elastizität und Hysterese. Um über alle Temperaturen eine spielfreie torsionale Dämpfungskennlinie zu erhalten, muss derzeit eine nachteilhaft hohe VorSpannung bzw. eine sehr hohe Mindeststeigung der Dämpferkennlinie angesetzt werden.

Als gattungsgemäßer Stand der Technik wird die EP 1 327 569 A2 genannt.

Die Aufgabe der Erfindung besteht darin, eine Lenkvorrichtung für Kraftfahrzeuge vorzuschlagen, welche einerseits eine akustische Entkopplung ermöglicht und andererseits eine radiale Elastizität für eine insbesondere spielfreie Verspannung in einer Verzahnung ermöglicht.

Diese Aufgabe wird gelöst durch die elektrische Lenkvorrichtung für Kraftfahrzeuge mit den Merkmalen gemäß Patentanspruch 1. Vorteilhafte Ausgestaltungen sind Gegenstand abhängiger Ansprüche.

Bevorzugt wird eine Vorrichtung bei der das erste Dämpferelement eine nicht-lineare Federkennlinie und das zweite Dämpferelement eine insbesondere geradlinig ansteigend lineare oder angenähert lineare Federkennlinie aufweist. Dadurch entsteht ein Gesamtverhalten mit einer verbesserten Gesamt-Federkennlinie.

Bevorzugt wird, wenn das zweite Dämpferelement und das erste Dämpferelement zusammen eine Federkennlinie in Form einer Hysterese mit konstanter oder stetiger Steigung, also keinem nur waagerechten Verlauf im Bereich der Umkehrpunkte ausbilden. Mit anderen Worten werden Dämpferelemente eingesetzt, welche hinsichtlich Material, Gestalt und/oder Dimensionierung eine gemeinsame Federkennlinie bilden, welche zumindest im zentralen Kennlinienverlauf einen stetig ansteigenden Verlauf hat.

Die Kombination der in für solche Anordnungen üblichen Einsatzkraftbereich bzw. Einsatzdrehinomentbereich nicht-linearen Federkennlinie und der linearen Federkennlinie der beiden Dämpferelemente erzeugt überraschend eine nahezu ideale oder sogar ideale Federkennlinie mit einer gewünschten Mindeststeigung. Insbesondere beträgt eine solche Steigung vorzugsweise etwa größer 1 Nm/°, bevorzugt größer 4-8 Nm/° im Bereich der Umkehrpunkte der Federkennlinie. Das heißt, die Federkennlinie weist eine Mindeststeigung mit einem mittigen linearen Anstieg auf.

Bevorzugt wird eine Vorrichtung, bei welcher das zweite Dämpferelement aus Metall, insbesondere Stahl, und/oder aus hartem Kunststoff ausgebildet ist. Diese Materialien lassen sich besonders einfach verarbeiten und bieten zugleich eine zumindest nahezu geradlinig lineare Federkennlinie.

Bevorzugt wird, wenn das zweite Dämpferelement strukturiert und angeordnet ist zum Bewirken einer Mittenzentrierung des zumindest einen Flansches und des Zahnkranzes relativ zueinander. Bevorzugt wird auch, das erste Dämpferelement mit einer insbesondere radialen Elastizität strukturiert und angeordnet ist zum Bewirken einer spielfreien Verspannung in einer Verzahnung des Zahnkranzes.

Das zweite Dämpferelement kann vorteilhaft aus einem einfach verarbeitbaren gebogenen Federblech ausgebildet sein.

Das Dämpferelement kann bevorzugt aus einem ringförmig, insbesondere geschlossen durchgehend ringförmigen Abschnitt und Fortsätzen ausgebildet ist, wobei die Fortsätze vom ringförmigen Abschnitt in radialer Richtung ausgerichtet in Zahnkranzausnehmungen des Zahnkranzes ragen.

Bevorzugt wird eine Vorrichtung, bei welcher die Fortsätze T-förmig ausgebildet sind, insbesondere T-förmig mit radial rückläufig verlaufenden Endabschnitten ausgebildet sind.

Die Fortsätze können auch aus radial verlaufenden Federelementen und daran radial außenseitig quer verlaufend angesetzten Querabschnitten ausgebildet sein. Bei dieser Ausgestaltung handelt es sich somit nicht um einstückige Fortsätze, insbesondere nicht um mit dem ringförmigen Abschnitt einstückig ausgebildete Fortsätze.

Die Fortsätze können an dem ringförmigen Abschnitt angesetzt, insbesondere fest befestigt sein anstelle einstückig mit dem ringförmigen Abschnitt ausgebildeten Fortsätzen.

Einfach herstellbar sind Fortsätze, die als aus in axialer Richtung des Zahnkranzes und des zumindest einen Flansches spritzgegossene oder umgebogene Abschnitte ausgebildet sind.

Bevorzugt wird außerdem eine Vorrichtung, bei welcher das zweite Dämpferelement als Metallfeder, insbesondere Stahlfeder mit starker Progression in Endlagen von radial in Zahnkranzausnehmungen ragenden Fortsätzen als dem ersten Dämpferelement ausgebildet ist. Dadurch lässt sich das separate Dämpferelement ersetzen.

Einsatzbar ist auch ein Dämpfer, der als Metall-Elastomerdämpfer im Verbund ausgebildet ist.

Allgemein bietet eine solche Vorrichtung eine Vielzahl einzelner Aspekte, welche individuell Vorteile bieten. Durch die Ausgestaltung gemäß der bevorzugten Ausführungsformen findet eine Trennung von Aufgaben auf verschiedene Komponenten statt, wobei einerseits eine Anschlagdämpfung mit Elastomer und andererseits eine Mittenzentrierung mit einem Federelement erzielbar ist. Dabei ist der Mittenbereich mit konstanter Federrate sehr exakt einstellbar. Vorzugsweise soll kein Spiel bei einem Nulldurchgang durch die Feder-Kennlinie entstehen. Weiterhin zweckmäßig ist eine Temperaturunabhängigkeit. Vorzugsweise soll die Feder-Kennlinie über die Lebensdauer bzw. die Zeit der verbleibenden Nutzung nicht nachlassen.

Noch vorteilhafter unterstützt werden Verfahren zum Vermeiden eines unnötigen Vorhaltens von Mindeststeigerungen der Dämpfungskennlinie um die entsprechende Mittellage, was die radikale Steifigkeit unnötig verschlechtern würde. Erzielt wird letztendlich vorteilhaft eine Entkopplung in eine radiale und torsionale Federwirkung.

In der Praxis umsetzbar sind entsprechende Ausführungsbeispiele im Rahmen von Federn, insbesondere Stahlfedern, von Kunststofffedern etc. Ausführungsmoglichkeiten können dabei in Form von Stahlfedern, Kunststofffedern, Stahlfedern mit Umspritzungs-Kunststoff, Stahl-Elastomer-Dämpfer im Verbund und durch eine Stahlfeder mit starker Progression in den Endlagen umgesetzt werden, um das Dämpfungselement auszugestalten.

Ein Ausführungsbeispiel und Modifikationen werden nachfolgend anhand der Zeichnung näher erläutert. Dabei werden mit gleichen Bezugszeichen jeweils gleiche oder gleich wirkende Komponenten bezeichnet. Insbesondere wird zur Vermeidung von Wiederholungen bei der Beschreibung verschiedener Ausführungsformen bezüglich nicht veränderter Komponenten und Funktionen auf die Beschreibung im Rahmen der weiteren Ausführungsformen verwiesen. Es zeigen:
- Fig. 1: eine auseinandergezogene Darstellung einer Zahnradan- ordnung gemäß einer ersten Ausführungsform,
- Fig. 2: ein zweites Dämpfungselement einer solchen Anordnung,
- Fig. 3: eine auseinandergezogene Darstellung einer zweiten Ausführungsform mit modifiziertem zweiten Dämpfungs- element,
- Fig. 4: ein solches modifiziertes Dämpfungselement,
- Fig. 5: eine zweite modifizierte Ausführungsform in auseinan- dergezogener Darstellung,
- Fig. 6: das entsprechende zweite Dämpfungselement dieser wei- teren modifizierten Ausführungsform,
- Fig. 7: eine seitliche Schnittansicht durch eine solche Zahn- radanardnung,
- Fig. 8: vier beispielhafte Federkennlinien verschiedener Dämpfungselemente bzw. Kombinationen von Dämpfungs- elementen, und

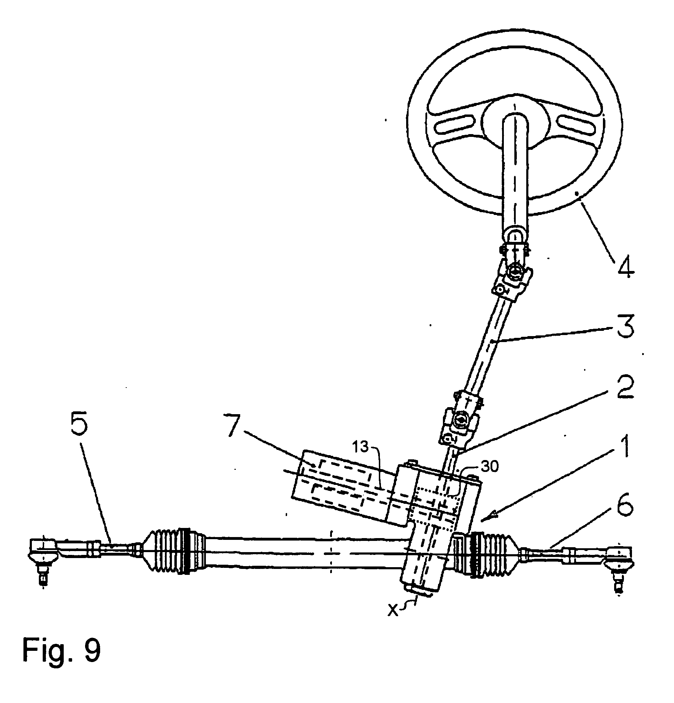

- Fig. 9: einzelne Komponenten einer elektrischen Lenkvorrich- tung gemäß dem Stand der Technik.

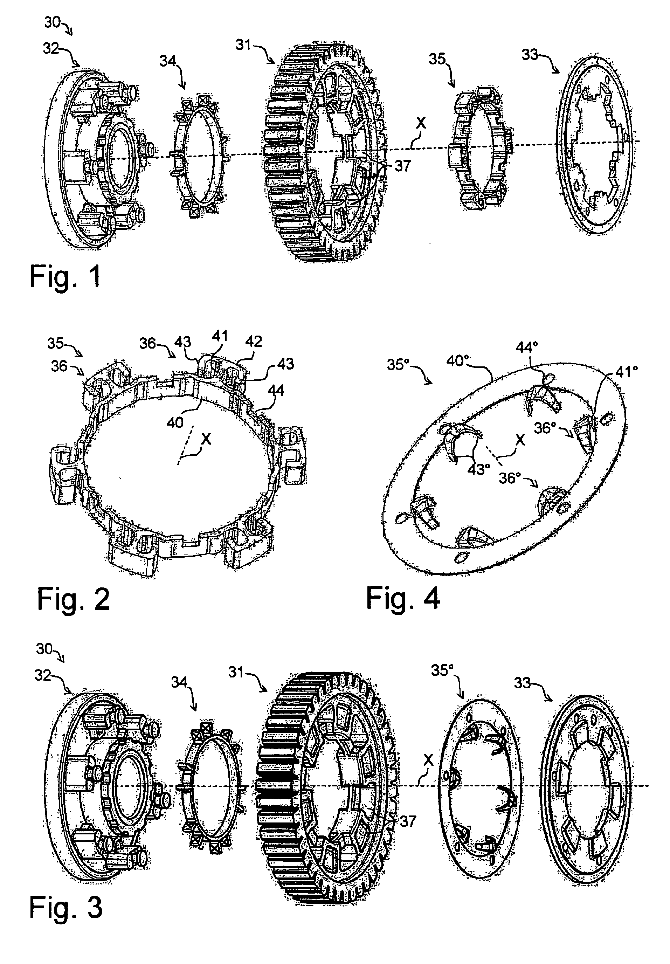

Fig. 1 zeigt als zentrales einen Zahnkranz 31 eines zentralen Zahnrads. Innenseitig des Zahnkranzes 31 ist eine Durchtrittsöffnung zum Durchführen einer Antriebswelle 2 ausgebildet. Außerdem sind in dem Abschnitt zwischen der Durchführungsöffnung und dem außenseitige Zahnkranz 31 Strukturierungen, insbesondere Zahnkranzausnehmungen 37 oder Zahnkranzdurchbrüche vorgesehen, welche zum Eingreifen oder Hindurchgreifen von Flanschelementen eines Flansches 32 und gegebenenfalls eines weiteren Flansches 33 dienen. Unter dem Zahnkranz 31 ist somit eine komplex ausgestaltete Komponente zu verstehen und nicht nur die Ausgestaltung eines äußeren Umfangsbereichs.

Bei der bevorzugten Ausführungsform sind der Flansch 32 und der weitere Flansch 33 mit ihren zentralen Rotationsachsen deckend zur Achse X des Zahnkranzes 31 angeordnet. Der Flansch 32 und der weitere Flansch 33 sind im zusammengesetzten Zustand von den beiden gegenüberliegenden seitlichen Seiten des Zahnrads mit ihren entsprechenden Flanschelementen ineinander eingreifend angeordnet. Die Antriebswelle durchgreift entsprechende Durchtrittsöffnungen des Flansches 32 und des weiteren Flansches 33 und tritt mit dem Flansch 32 und/oder dem weiteren Flansch 33 in eine rotatorische Wirkverbindung zum Übertragen von Drehmomenten zwischen Flansch 32 und weiterem Flansch 33 einerseits und der Antriebswelle andererseits.

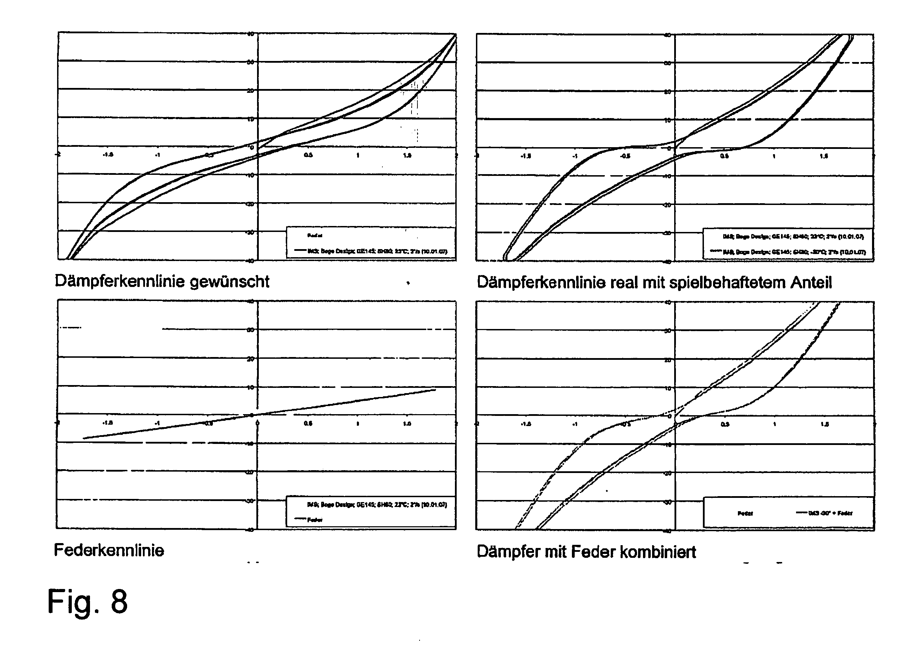

Zur Kopplung des Flansches 32 und des weiteren Flansches 33 mit dem Zahnkranz 31 und zum Übertragen von Drehmomenten zwischen diesen sind ein erstes Dämpfungselement 34 und ein zweites Dämpfungselement 35 zwischen einerseits dem Flansch 32 und dem Zahnkranz 31 bzw. andererseits dem weiteren Flansch 33 und dem Zahnkranz 31 eingesetzt. Die beiden Dämpfungselemente 34, 35 bestehen aus im Wesentlichen ringförmigen Abschnitten mit radial außenseitig abstehenden Fortsätzen. Die Fortsätze greifen in entsprechende Zahnkranzausnehmungen 37 ein und dienen zur Übertragung von Drehmomenten im Falle einer Rotation der Antriebswelle oder des Zahnkranzes 31. Das erste Dämpfungselement 34 ist dabei aus einem hochelastischen Material, beispielsweise aus Gummi, gefertigt und dient zur Dämpfung. Das zweite Dämpfungselement 35 ist hingegen aus einem festeren Material mit einer unterschiedlichen Elastizität und Festigkeit ausgebildet. Vorzugsweise ist das zweite Dämpfungselement 35 aus Metall, insbesondere Federstahl, oder gespritztem Kunststoff gefertigt. Fig. 8 zeigt beispielhafte Federkennlinien. Links oben ist eine gewünschte ideale Dämpferkennlinie bzw. Federkennlinie h dargestellt. Rechts oben ist eine Federkennlinie h(34) bzw. Dämpferkennlinie dargestellt, welche sich beim Einsatz zweier solcher erster Dämpfungselemente 34 ergibt. Gut erkennbar ist im Bereich der Umkehrpunkte u der als Hysterese ausgebildeten Federkennlinie h(34) ein waagerechter Verlauf. Bedingt durch diesen waagerechten Verlauf entstehen bei derartigen Zahnradanordnungen jedoch nach wie vor störende Geräusche sowie die weiteren genannten Nachteile.

Links unten ist eine Federkennlinie h(35) dargestellt, welche einen im Idealfall geradlinigen und ansteigenden Verlauf aufweist. Eine solche Federkennlinie h(35) ist mit einer idealen elastischen Feder erzielbar, welche aus einem harten Federelement gefertigt ist. Eine solche harte Federanordnung würde jedoch keine ausreichende Dämpfung bewirken.

Überraschenderweise lässt sich jedoch eine Federkennlinie h mit einem kontinuierlich schrägen Verlauf auch in den Umkehrpunkten u erzielen, indem bei einer solchen Zahnradanordnung als Dämpfer kombiniert sowohl ein erstes Dämpfungselement 34 als auch ein zweites Dämpfungselement 35 eingesetzt werden. Diese Kombination führt zu der in Fig. 8 rechts unten dargestellten Federkennlinie h, welche deutlich näher an der gewünschten Federkennlinie liegt.

Fig. 2 zeigt vergrößert das zweite Dämpfungselement 35 gemäß der ersten Ausführungsform. Von einem vorzugsweise durchgehend umlaufend ausgebildeten ringförmigen Abschnitt 40 ragen in radial außenseitige Richtung eine Vielzahl der Fortsätze 36, welche in endmontiertem Zustand in die entsprechenden Zahnkranzausnehmungen 37 des Zahnkranzes 31 eingreifen. Zum Ermöglichen eines rotationsfesten Eingriffs in entsprechende Strukturen des Zahnkranzes 31 und/oder des weiteren Flansches 33, weist der ringförmige Abschnitt 40 Ausnehmungen 44 auf, welche bei der dargestellten Variante von einer Außenseite her in den ringförmigen Abschnitt 40 teilweise hineinführen und rechteckförmig ausgebildet sind.

Vorzugsweise ist der ringförmige Abschnitt 40 dabei in Form eines schmalen Teilzylinders ausgebildet.

Die bevorzugten Fortsätzen 36 bestehen jeweils aus einem vom ringförmigen Abschnitt 40 ausgehend radial verlaufenden Federelement 41 und an dessen außenseitigem Ende einem Querabschnitt 42, so dass die Fortsätze 36 eine T-förmige Gestalt aufweisen. Die jeweiligen Querabschnitte 42 verlaufen dabei vorzugsweise beabstandet und parallel zu dem Außenumfang des ringförmigen Abschnitts 40. Außenseitig gehen die Querabschnitte 34 gemäß der besonders bevorzugten Ausgestaltung in Endabschnitte 43 über, welche in rückwärtig bzw. radial rückläufig gerichteter Richtung wieder in Richtung des ringförmigen Abschnitts 40 verlaufen.

Insbesondere das anhand Fig. 2 dargestellte zweite Dämpfungselement 35 lässt sich besonders einfach als Kunststoffspritzteil fertigen.

Eine zweite Ausführungsform ist anhand der Fig. 3 und 4 skizziert. Das beispielhafte zweite Dämpfungselement 35° dieser Ausführungsform ist wiederum aus einem im Wesentlichen kreisförmigen Abschnitt 40° ausgebildet, von dem bei dieser Ausführungsform radial innenseitig gerichtet Fortsätze 36° ausgebildet sind. Der ringförmige Abschnitt 40° besteht dabei aus einem flächigen Element mit einer Flächenerstreckung senkrecht zur Rotationsachse und kann seitlich auf eine Seitenwandung des Zahnkranzes 31 aufgelegt werden.

Die Fortsätze 36° sind bei Ausbildung aus einem Blech oder Stahlblech durch Ausstanzen in einem ersten Schritt und Umbiegen in einem weiteren Herstellungsschritt auf einfache Art und Weise formbar. Die Fortsätze 36° bestehen dabei wiederum aus einem ersten radial verlaufenden Federelement 41, welches jedoch in radial innenseitiger Richtung und teilweise in axialer Richtung der Rotationsachse verläuft. An den vom ringförmigen Abschnitt 40° abgewandten Ende gehen die radial verlaufenden Federelemente 41 wieder in einen Querabschnitt 42° über, so dass eine im Wesentlichen T-förmige Ausgestaltung entsteht. Jedoch sind die beiden seitlichen Abschnitte der jeweiligen Querabschnitte 42° so gebogen, dass deren außenseitige Enden zumindest mit einer teilweisen Richtungs- bzw. Ausrichtungskomponente in paralleler Richtung zur Rotationsachse verlaufen. Dadurch sind die umgebogenen Querabschnitte 42° in entsprechende Zahnkranzausnehmungen 37 einsetzbar.

Vorzugsweise weist der ringförmige Abschnitt 40° ebenfalls Ausnehmungen 44° auf, welche zum Festlegen an dem Zahnkranz und/oder an dem benachbarten weiteren Flansch 33 ausgestaltet sind. Die Ausnehmungen 44° sind dabei beispielhaft als Bohrungen ausgebildet, welche durch das Material des ringförmigen Abschnitts 40 parallel zur Rotationsachse hindurchführen.

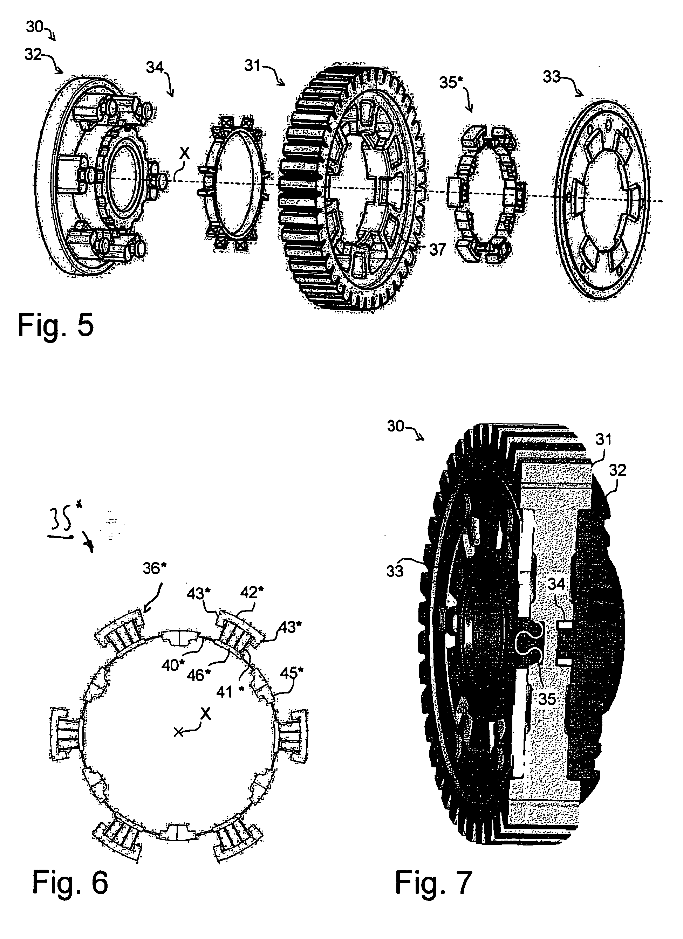

Anhand der Fig. 5 und 6 ist eine noch weitere Ausführungsform skizziert. Bei dieser besteht das zweite Dämpfungselement 35* aus einer Vielzahl einzelner Komponenten, welche aneinander befestigt sind. Basis ist wiederum ein ringförmiger Abschnitt 40* mit einem vorzugsweise zylinderförmigen Verlauf. Fortsätze 36* sind wiederum radial nach außen gerichtet. Die Fortsätze 36* bestehen aus einem wiederum in radial außenseitig verlaufenden Federelement 41*, welches beispielsweise aus einem gefalteten Blech hergestellt ist. Einzelne Rippen verlaufen dabei zueinander benachbart in radial außenseitiger Richtung. Anstelle eines gefalteten einzelnen Blechs können auch mehrere einzelne solcher Rippen radial nach außen verlaufend angeordnet sein. Die Befestigung eines solchen radial verlaufenden Federelementes 41* kann an dem ringförmigen Abschnitt 40* auf einfache Art und Weise dadurch erfolgen, dass ein Verbindungsabschnitt einerseits außenseitig das oder die radial verlaufenden Federelemente 41* fest aufnimmt und andererseits fest mit dem ringförmigen Abschnitt 40 verbunden ist, beispielsweise von der Seite her auf diesen aufgesteckt ist.

Außenseitig gehen das oder die radial verlaufenden Federelemente 41 vorzugsweise wieder in einen Querabschnitt 42* über, wobei auch dieser besonders bevorzugt wieder radial rückläufig verlaufende Endabschnitte 43* aufweist. Während der ringförmige Körper 40* und die radial verlaufenden Federelemente 41* vorzugsweise aus einem metallischen Material, insbesondere einem Stahl wie Federstahl gefertigt sind, werden die Verbindungselemente 46* zum Verbinden der radial verlaufenden Federelemente 41* und des ringförmigen Abschnitts 40* sowie die außenseitigen Querabschnitte 42* und deren Endabschnitte 43* vorzugsweise aus hartem Kunststoff gefertigt. Die Kunststoffelemente können dabei insbesondere durch Spritzguss gefertigt werden und gegebenenfalls sogar beim Spritzgießen die metallischen Elemente fest in sich aufnehmen.

Beispielhaft können als Verbindungsabschnitte zusätzlich an dem ringförmigen Abschnitt 40* weitere umgebogene Abschnitte oder Kunststoffabschnitte angesetzt sein, welche in entsprechende Gegenelemente bzw. Ausnehmungen insbesondere des weiteren Flansches 33 eingreifen.

Fig. 7 zeigt eine Schnittansicht durch eine zusammengesetzte Zahnradanordnung, wobei auf der linken Seite ein Federelement in Form eines derartigen zweiten Dämpfungselements 35 geschnitten und bogenförmig verlaufend dargestellt ist. Auf der gegenüberliegenden rechten Seite sind hingegen zwei Abschnitte des ringförmigen gummi-elastischen ersten Dämpfungselements 34 im Schnitt dargestellt.

Neben den dargestellten Ausführungsformen sind auch noch weitere verschiedenartig strukturierte Ausführungsformen umsetzbar. Insbesondere sind auch Kombinationen der einzelnen Elemente und Ausgestaltungen der dargestellten sowie weitere umsetzbare Ausführungsformen durch Kombination ausgestaltbar. Neben der Ausgestaltung mit zwei eigenständigen Dämpfungselementen als einem elastischen Federelement und als einem insbesondere metallischen Federelement sind auch kombinierte Ausgestaltungen mit gegebenenfalls sogar nur einem einzigen Dämpfungselement denkbar, bei welchem die verschiedenen Eigenschaften des ersten und des zweiten Dämpfungselements durch entsprechende Verbundausgestaltung umgesetzt sind. Generell können Kombinationen der verschiedenen Elemente aus einerseits metallischen und andererseits aus Kunststoff gefertigten Abschnitten umgesetzt werden.

## Patentansprüche

1. Elektrische Lenkvorrichtung mit einer Zahnkranzanordnung aus
- einem Zahnkranz (31),
- zumindest einem Flansch (32) und
- zumindest einem den Zahnkranz (31) und Flansch (32) koppelnden Dämpfer, wobei
- der Dämpfer ein erstes Dämpferelement (34) und ein zweites Dämpferelement (35; 35°; 35*) aufweist, welche jeweils eine unterschiedliche Elastizität aufweisen, **dadurch gekennzeichnet, dass** das erste Dämpferelement (34) und das zweite Dämpferelement (35; 35°; 35*) als zwei eigenständige Komponenten ausgebildet sind, wobei das erste Dämpferelement zwischen dem Zahnkranz (31) und dem Flansch (32) und das zweite Dämpferelement (35; 35°; 35*) zwischen dem Zahnkranz (31) und einem zweiten Flansch (33) angeordnet sind.

2. Vorrichtung nach Anspruch 1, bei der das erste Dämpferelement (34) eine nicht-lineare Federkennlinie (h(34)) und das zweite Dämpferelement (35; 35°; 35*) eine lineare oder angenähert lineare Federkennlinie (h(35)) aufweist.

3. Vorrichtung nach Anspruch 1 oder 2, bei der das zweite Dämpferelement (35; 35°; 35*) und das erste Dämpferelement (34) zusammen eine Federkennlinie (h) mit konstanter oder stetiger steigung im Bereich der Umkehrpunkte (u, u) ausbilden.

4. Vorrichtung nach einem vorstehenden Anspruch, bei welcher das zweite Dämpferelement (35; 35°; 35*) aus Metall, insbesondere Stahl, und/oder aus Kunststoff ausgebildet ist.

5. Vorrichtung nach einem vorstehenden Anspruch, bei welcher das zweite Dämpferelement (35; 35°; 35*) strukturiert und angeordnet ist zum Bewirken einer Mittenzentrierung des zumindest einen Flansches (32) und des Zahnkranzes (33) relativ zueinander.

6. Vorrichtung nach einem vorstehenden Anspruch, bei welcher das erste Dämpferelement (34) mit einer insbesondere radialen Elastizität strukturiert und angeordnet ist zum Bewirken einer spielfreien Verspannung in einer Verzahnung des Zahnkranzes (31).

7. Vorrichtung nach einem vorstehenden Anspruch, bei welcher das zweite Dämpferelement (35; 35°; 35*) aus einem gebogenen Federblech ausgebildet ist.

8. Vorrichtung nach einem vorstehenden Anspruch, bei welcher das zweite Dämpferelement (35; 35°; 35*) aus einem ringförmigen, insbesondere geschlossen durchgehend ringförmigen Abschnitt (40; 40°; 40*) und Fortsätzen (36; 36°; 36*) ausgebildet ist, wobei die Fortsätze vom ringförmigen Abschnitt (40; 40°; 40*) in radialer Richtung ausgerichtet in Zahnkranzausnehmungen (37) des Zahnkranzes (31) ragen.

9. Vorrichtung nach Anspruch 8, bei welcher die Fortsätze (36; 36*) T-förmig ausgebildet sind, insbesondere T-förmig mit radial rückläufig verlaufenden Endabschnitten (42; 42*) ausgebildet sind.

10. Vorrichtung nach Anspruch 9, bei welcher die Fortsätze (36; 36*) aus radial verlaufenden Federelementen (41; 41°; 41*) und daran radial außenseitig quer verlaufend angesetzten Querabschnitten (42; 42*) ausgebildet sind.

11. Vorrichtung nach einem der Ansprüche 8 bis 10, bei welcher die Fortsätze (36*) an dem ringförmigen Abschnitt (40*) angesetzt, insbesondere fest befestigt sind.

12. Vorrichtung nach einem der Ansprüche 1 bis 9, bei welcher die Fortsätze (36°) als aus in axialer Richtung (X) des Zahnkranzes (31) und des zumindest einen Flansches (32) spritzgegossene oder umgebogene Abschnitte (43°) ausgebildet sind.

13. Vorrichtung nach einem vorstehenden Anspruch, bei welcher das zweite Dämpferelement (35; 35°; 35*) als Metallfeder, insbesondere Stahlfeder, mit starker Progression der Kennlinie in Endlagen ausgebildet ist.

14. Vorrichtung nach einem vorstehenden Anspruch, bei welcher das zweite Dämpferelement (35; 35°; 35*) als Verbundteil aus Metall und Elastomer ausgebildet ist.

## Claims

1. An electric steering apparatus with a toothed rim arrangement comprising
- a toothed rim (31),
- at least one flange (32) and
- at least one damping means coupling the toothed rim (31) and the flange (32), wherein
- the damping means has a first damping element (34) and a second damping element (35; 35°; 35*), which in each case have a different degree of elasticity, **characterized in that** the first damping element (34) and the second damping element (35; 35°; 35*) are designed in the form of two independent components, wherein the first damping element is arranged between the toothed rim (31) and the flange (32) and the second damping element (35; 35°; 35*) is arranged between the toothed rim (31) and a second flange (33).

2. An apparatus according to claim 1, in which the first damping element (34) has a non-linear spring characteristic (h(34)) and the second damping element (35; 35°; 35*) has a linear or approximately linear spring characteristic (h(35)).

3. An apparatus according to claim 1 or 2, in which the second damping element (35; 35°; 35*) and the first damping element (34) together form a spring characteristic (h) with a constant or steady inclination in the region of the reversal point (u, u).

4. An apparatus according to a preceding claim, in which the second damping element (35; 35°; 35*) is formed from metal, in particular steel, and/or plastics material.

5. An apparatus according to a preceding claim, in which the second damping element (35; 35°; 35*) is textured and is arranged in order to effect a central centring of the at least one flange (32) and the toothed rim (33) relative to each other.

6. An apparatus according to a preceding claim, in which the first damping element (34) is textured with an elasticity, in particular a radial elasticity, and is arranged in order to effect a clearance-free tensioning in a set of teeth of the toothed rim (31).

7. An apparatus according to a preceding claim, in which the second damping element (35; 35°; 35*) is formed from a curved spring metal sheet.

8. An apparatus according to a preceding claim, in which the second damping element (35; 35°; 35*) is formed from an annular portion, in particular a continuously closed annular portion, (40; 40°; 40*) and extensions (36; 36°; 36*), wherein the extensions, orientated in the radial direction, project from the annular portion (40; 40°; 40*) into recesses (37) in the toothed rim (31).

9. An apparatus according to claim 8, in which the extensions (36; 36*) are made T-shaped, in particular T-shaped with end portions (42; 42*) projecting radially to the rear.

10. An apparatus according to claim 8, in which the extensions (36; 36*) are formed from radially extending spring elements (41; 41°; 41*) and transverse portions (42; 42*) positioned thereon radially on the outside in a transversely extending manner.

11. An apparatus according to any one of claims 8 to 10, in which the extensions (36*) are positioned on the annular portion (40*), and in particular fastened in a fixed manner.

12. An apparatus according to any one of claims 1 to 9, in which the extensions (36°) are designed in the form of portions (43°) bent over or injection-moulded from ... in the axial direction (X) of the toothed rim (31) and the at least one flange (32).

13. An apparatus according to a preceding claim, in which the second damping element (35; 35°; 35*) is designed in the form of a metallic spring, in particular a steel spring, with a pronounced progression of the characteristic in the end positions.

14. An apparatus according to a preceding claim, in which the second damping element (35; 35°; 35*) is designed in the form of a composite part of metal and elastomer.

## Revendications

1. Dispositif de direction électrique comprenant une installation de couronne dentée comportant :
- une couronne dentée (31),
- au moins une bride (32), et
- au moins un amortisseur couplant la couronne dentée (31) et à la bride (32),
* l'amortisseur comprenant un premier élément amortisseur (34) et un second élément amortisseur (35 ; 35° ; 35*) dont chacun a une élasticité différente,
dispositif de direction **caractérisé en ce que** le premier élément amortisseur (34) et le second élément amortisseur (35 ; 35° ; 35*) sont réalisé comme composants indépendants, le premier élément amortisseur étant disposé entre la couronne dentée (31) et la bride (32) et le second élément amortisseur (35 ; 35° ; 35*) étant disposé entre la couronne dentée (31) et une seconde bride (33).

2. Dispositif de direction selon la revendication 1,
dans lequel
le premier élément amortisseur (34) a une caractéristique de ressort non linéaire (h(34)) et le second élément amortisseur (35 ; 35° ; 35*) a une caractéristique de ressort (h(35)) linéaire ou approximativement linéaire.

3. Dispositif de direction selon la revendication 1 ou 2,
dans lequel
le second élément amortisseur (35, 35°, 35*) et le premier élément amortisseur (34) forment ensembles une caractéristique de ressort (h) avec une croissance à pente constante ou continue dans la plage du point de rebroussement (u, u).

4. Dispositif de direction selon l'une des revendications précédentes,
dans lequel
le second élément amortisseur (35 ; 35° ; 35*) est en métal, en particulier en acier, et/ou en matière synthétique.

5. Dispositif de direction selon l'une des revendications précédentes,
dans lequel
le second élément amortisseur (35 ; 35° ; 35*) est structuré et monté pour effectuer un centrage de la bride (32) et de la couronne dentée (33) l'une par rapport à l'autre.

6. Dispositif de direction selon l'une des revendications précédentes,
dans lequel
le premier élément amortisseur (34) est structuré et monté avec une élasticité en particulier radiale pour réaliser un serrage sans jeu dans une denture de la couronne dentée (31).

7. Dispositif selon l'une des revendications précédentes,
dans lequel
le second élément amortisseur (35, 35°, 35*) est en tôle élastique pliée.

8. Dispositif de direction selon l'une des revendications précédentes,
dans lequel
le second élément amortisseur (35, 35°, 35*) comporte un segment annulaire, en particulier un segment annulaire fermé (40, 40°, 40*) et des prolongements (36, 36°, 36*), les prolongements du segment annulaire (40 ; 40° ; 40*) sont dirigées dans la direction radiale et viennent en prise dans les évidements (37) de la couronne dentée (31).

9. Dispositif de direction selon la revendication 8,
dans lequel
les prolongements (36, 36*) sont en forme de T, en particulier en forme de T avec des segments d'extrémité (42, 42*) s'étendant radialement vers l'arrière.

10. Dispositif de direction selon la revendication 9,
dans lequel
les prolongements (36, 36*) sont constituées d'éléments de ressort (41 ; 41° ; 41*) dirigés radialement et des segments transversaux (42, 42*) dirigés transversalement et rapportés radialement côté extérieur.

11. Dispositif de direction selon l'une des revendications 8 à 10,
dans lequel
les prolongements (36*) sont montés sur le segment annulaire (40*) en particulier fixés solidairement à celui-ci.

12. Dispositif de direction selon l'une des revendications 1 à 9,
dans lequel
les prolongements (36°) sont réalisés par des segments (43°) injectés ou repliés dans la direction axiale (X) de la couronne dentée (31) et d'au moins une bride (32).

13. Dispositif de direction selon l'une des revendications précédentes,
dans lequel
le second élément amortisseur (35, 35°, 35*) est un ressort métallique, en particulier un ressort en acier avec une forte progression de la caractéristique dans les positions extrêmes.

14. Dispositif de direction selon l'une des revendications précédentes,
dans lequel
le second élément amortisseur (35, 35°, 35*) est réalisé comme pièce composite en métal et en élastomère.
